# EUROPEAN PATENT APPLICATION

(11) **EP 4 636 294 A1**
(43) Date of publication of application: **22.10.2025**
(21) Application number: 25170370.8
(22) Date of filing: 14.04.2025
(51) Int. Cl.: F16L 33/22

(54) **CONNECTION FOR A FLUID WITH A RING**

(30) Priority: 19.04.2024 IT 202400008971
(71) Applicant: HUTCHINSON S.r.l., 10090 Rivoli (TO) (IT)
(72) Inventor: MORETTI, Nicola, 10090 Gassino Torinese (TO) (IT); PASTENA, Davide, 10139 Torino (IT); ROSSI, Katia, 10093 Collegno (TO) (IT); STURARI, Maurizio, 10137 Torino (IT)
(74) Representative: Vitillo, Giuseppe

(57) **Abstract**

Connection (1) for a fluid comprising: a hose (2), in which a fluid is intended to flow, comprising: an outer layer (21) of polymeric material, an inner layer (22) of polymeric material, and at least one intermediate layer (23), interposed between the outer and inner layers (21, 22), made from net, mesh, braid, spiral-wrapped wire, textile fibres, fabric, or non-woven fabric; a connector (4), in which the fluid is intended to flow, and which is in fluidic communication with the hose (2); wherein the hose (2) is mounted around a male portion (8) of the connector (4); a ring (6) made of polymeric material, mounted around the hose (2) at the male portion (8) of the connector (4); when mounted around the hose (2) at the male portion (8), the ring (6) is deformed and exerts compression on the hose (2) because of such deformation.

## Description

### Technical field

The present invention relates to a connection for a fluid, in particular for use in the automotive industry. The connection is useful to create a fluid line, e.g. for liquids such as coolants.

### Technical background

In the automotive industry, it is known to produce a hose in which a fluid is intended to flow, which comprises: an outer layer of polymeric material, an inner layer of polymeric material, and an intermediate layer, interposed between the outer and inner layers, made of fabric. The inner layer is intended to stay in contact with a fluid, such as a coolant. The intermediate layer is useful to prevent an excessive expansion of the polymeric material, which is deformable; such expansion is further promoted by the high temperature that the fluid may reach, which makes the polymeric material of the hose less rigid. The hose is mounted around a male portion of a connector. Because of the deformability of the polymer of the hose, the connection between the hose and the connector is secured by putting a metal ring around the end of the hose, so as to fasten the hose to the male portion and prevent it from slipping off.

However, systems of this type suffer from a few drawbacks. One drawback is that the metal ring is heavy and implies quite long production times and high production costs. In addition, the metal ring is very rigid and may damage the underlying hose as it is fastened or during the service life of the hose.

US2016040806A1 shows a hose with two polymeric layers and an intermediate reinforcement textile layer, wherein the hose is fastened to the connector by means of a screw-type or clip-type system which appears to be a metallic one. Furthermore, the ring is mounted after the hose has been fitted onto the connector, resulting in a longer installation time.

### Summary of the invention

It is one object of the present invention to provide a connection and a production method which can overcome this and other drawbacks of the prior art while at the same time being simple and economical.

According to the present invention, this and other objects are achieved through a connection and a production method as set out in the appended independent claims.

It is understood that the appended claims are an integral part of the technical teachings provided in the following detailed description of the present invention. In particular, the appended dependent claims define some preferred embodiments of the present invention that include some optional technical features.

### Brief description of the drawings

Further features and advantages of the present invention will become apparent in light of the following detailed description, provided merely as a non-limiting example with reference to the annexed drawings, wherein:
- Figure 1 is a perspective view of a connection according to a first embodiment of the present invention,
- Figure 2 shows the connection of Figure 1 with some internal parts exposed,
- Figure 3 shows a longitudinal section of the connection of Figure 1,
- Figure 4 is a perspective view of a connector having a "fir-tree" male portion,
- Figure 5 is a perspective view of a different connector having a "hose-fitting" male portion.

### Detailed description of the invention

With reference to the annexed drawings, there is shown a connection 1 for a fluid comprising:
- a hose 2, in which a fluid is intended to flow, comprising: an outer layer 21 of polymeric material, an inner layer 22 of polymeric material, and at least one intermediate layer 23, interposed between the outer and inner layers 21, 22, made from net, mesh, braid, spiral-wrapped wire, textile fibres, fabric, or non-woven fabric,
- a connector 4, in which the fluid is intended to flow, and which is in fluidic communication with hose 2; wherein hose 2 is mounted around a male portion 8 of connector 4,
- a ring 6 made of polymeric material, mounted around hose 2 at male portion 8 of connector 4.

When mounted around hose 2 at male portion 8, ring 6 is deformed and exerts compression on hose 2 because of such deformation, in particular only because of such deformation.

When mounted around hose 2 at male portion 8, ring 6 is useful to improve the connection between hose 2 and connector 4.

In particular, when ring 6 is mounted around hose 2 at male portion 8, it undergoes a deformation which is at least partly elastic. Such deformation generates compression on hose 2.

Preferably, ring 6 has a continuous circular profile. As an alternative, ring 6 is C-shaped. In the preferred example, ring 6 has a cylindrical shape. In other words, ring 6 has a bushing-like shape. Therefore, ring 6 is essentially a band. For example, the length of ring 6 is at least three times its thickness; preferably, the length of ring 6 is at least ten times its thickness.

Preferably, hose 2 has a circular cross-section; in particular, the inner and outer surfaces of hose 2 are circular in shape. In the example, male portion 8 has a circular cross-section; in particular, the inner and outer surfaces of male portion 8 are circular in shape.

In particular, ring 6 has no other means for compressing hose 2 onto male portion 8 of connector 4. Therefore, it is only the deformation of ring 6 that generates a compressive force onto the hose and onto the underlying male portion 8. For example, ring 6 has no collar that can be tightened by means of screws or bolts, as is the case in US2016040806A1.

Preferably, outer and inner layers 21, 22 are made of thermoplastic elastomer or "TPE" (preferably TPV, TPO, or TPC), or thermosetting elastomer (e.g. EPDM).

Preferably, intermediate layer 23 is made of aramid fibre (e.g. Kevlar or aramid), PA, or PET.

Preferably, connector 4 is made of polymeric material or fiberglass-reinforced polymeric material.

Preferably, the material of ring 6 is more rigid than the material of hose 2. In particular, the material of ring 6 is more rigid than the material of inner layer 22 or the material of outer layer 21. According to some possible embodiments, the material of ring 6 is more rigid than at least one of the materials employed for making hose 2.

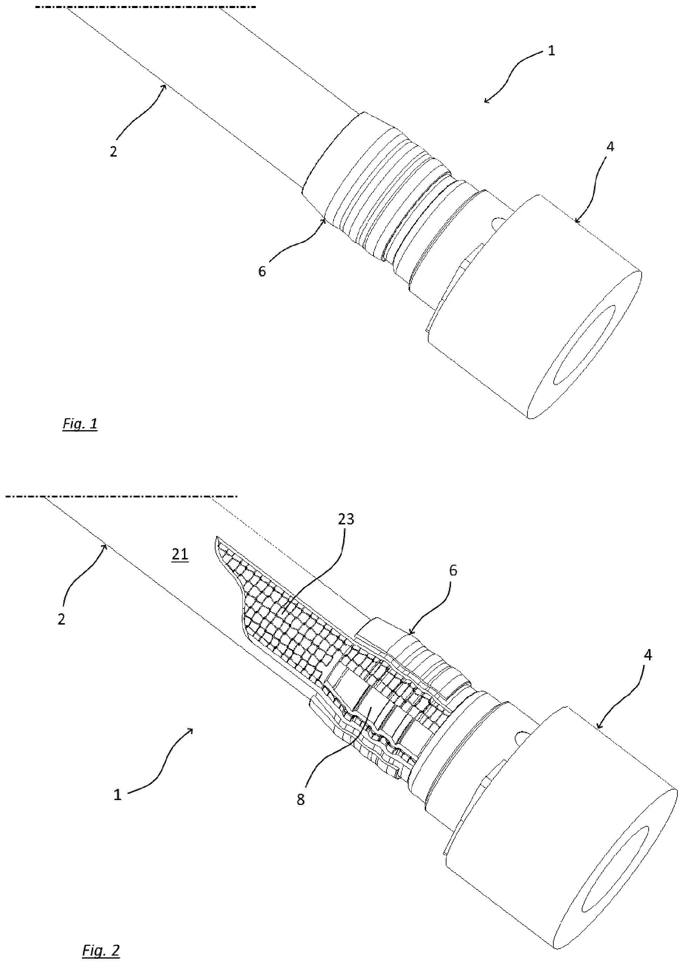

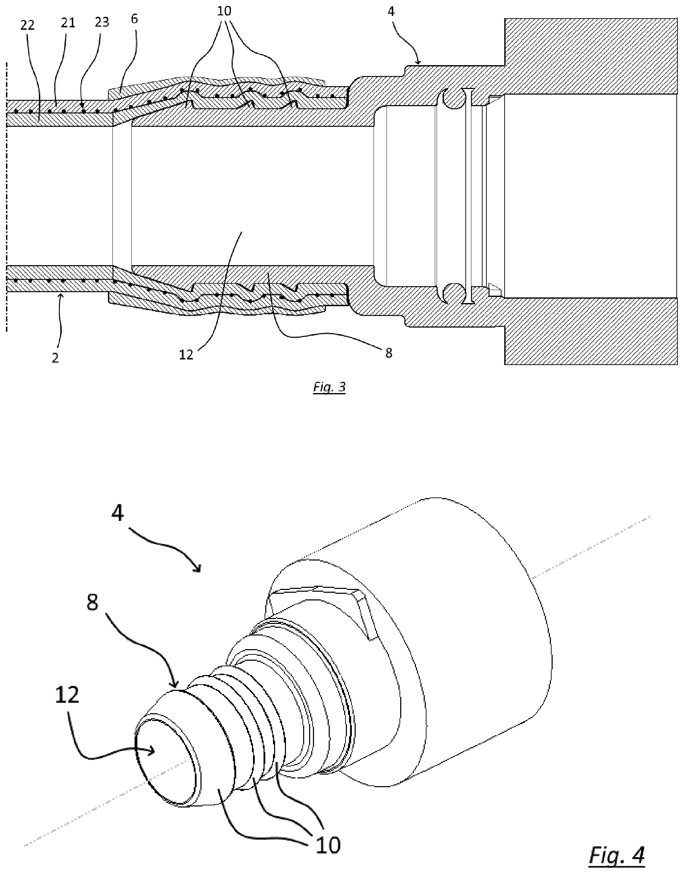

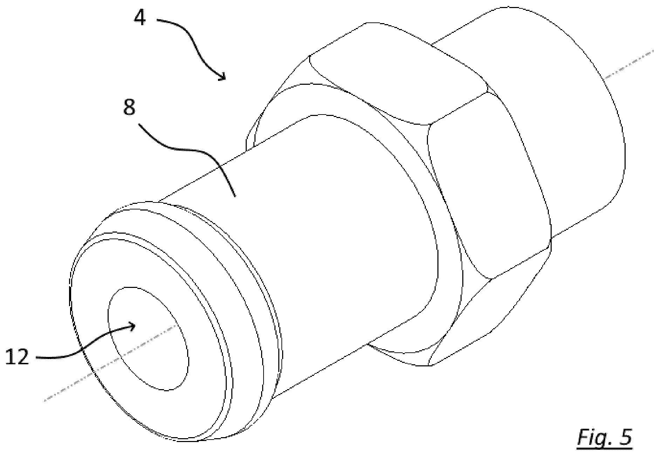

Preferably, an outer surface of male portion 8 of connector 4 comprises one or more corrugations to prevent hose 2 from slipping off. In the example, there are a plurality of protrusions 10 on male portion 8. Preferably, such protrusions 10 are continuous and circumferential around the outer surface of male portion 8. In the non-limiting example shown in Figures 1-4, protrusions 10 are configured to create a "fir-tree" connection with hose 2. As an alternative, male portion 8 is shaped like a so-called "hose fitting", as shown in the example of Fig. 5.

Male portion 8 has a cavity 12 in which the fluid is intended to flow. Cavity 12 is in fluidic communication with hose 2.

Preferably, in an undeformed condition (e.g. when elements 2, 4, 6 are separate from one another), the inside diameter of ring 6 is greater than the outside diameter of hose 2. For example, the inside diameter of ring 6 exceeds the outside diameter of hose 2 by 0.5 - 2 mm. This allows an operator to easily insert hose 2 into ring 6.

Intermediate layer 23 may be a mesh, which may be a textile mesh or, alternatively, a metal mesh. The textile fibres of the intermediate layer may be natural fibres, artificial fibres, synthetic fibres, or a combination thereof; preferably, they are synthetic fibres. According to some possible variants, intermediate layer 23 may include, or consist of, textile fibres, and such textile fibres can be joined to form a yarn, mesh, fabric, braid, or non-woven fabric (NWF). According to one possible variant, intermediate layer 23 (e.g. mesh, net, braid, spiral-wound wire, fabric, or NWF) is arranged in a spiral fashion along hose 2.

According to other possible variants, a second intermediate layer may be superimposed on intermediate layer 23 for the purpose of further increasing the mechanical reinforcement effect. The two intermediate layers 23 may differ in their nature and in the disposition of the textile fibres. As an alternative, the two intermediate layers 23 are equal.

Intermediate layer 23 is a reinforcement layer that counters the expansion of hose 2 caused by increased pressure and temperature of the fluid flowing therein.

Preferably, ring 6 is made by extrusion or injection moulding.

Ring 6 offers the advantage that it is light, can be produced quickly and economically, and does not damage the structure of hose 2.

Inner layer 22 is adapted to be chemically resistant to the fluid, in particular a liquid, flowing therein.

Connection 1 of the invention can be advantageously used in the automotive industry, e.g. for carrying the coolant of an internal combustion engine, or for carrying coolant for electric batteries of a hybrid or electric vehicle.

The polymeric materials of connection 1 may optionally include recycled polymeric material. Said polymeric parts may be integrally or partially produced from recycled polymeric material.

The invention also concerns a vehicle comprising a connection according to the invention. The invention further concerns a cooling system for a vehicle, such system comprising a connection according to the invention.

The method for producing a connection 1 according to the invention comprises the steps of:
- providing hose 2, connector 4, and ring 6,
- inserting one end of hose 2 into ring 6,
- inserting male portion 8 of connector 4 into the end of hose 2, thereby causing a deformation of the end of hose 2 and of ring 6.

According to one possible embodiment, the step of inserting one end of hose 2 into ring 6 is carried out manually by an operator. As an alternative, said step if carried out in an automated manner.

In particular, the step of inserting male portion 8 of connector 4 into the end of hose 2 may be preceded by a step of widening the end of hose 2 to facilitate the insertion of male portion 8. Optionally, the end of hose 2 may be held in the widened condition prior to inserting male portion 8.

Preferably, the step of widening the end of hose 2, and optionally the step of holding said end in the widened condition, are carried out in an automated manner. Such steps may be carried by suitable machinery expanding the end of hose 2.

Preferably, ring 6 is obtained by using an extrusion or injection moulding process.

Preferably, the step of inserting male portion 8 of connector 4 into the end of hose 2 is carried out in an automated manner, in particular through the use of suitable machinery. For example, a machine moves connector 4 towards hose 2, which is held stationary; alternatively, a machine moves hose 2 towards connector 4, which is held stationary; alternatively, a machine moves hose 2 and connector 4 towards each other.

During the mutual approaching of hose 2 and connector 4, ring 6 remains, or is held, in proximity to the end of hose 2. Such mutual approaching ends when the end of hose 2 has been correctly fitted onto male portion 8. During the insertion of male portion 8 into the end of hose 2, said male portion 8 expands both the end of hose 2 and ring 6. Thanks to such deformation, ring 6 exerts a compression force onto that portion of hose 2 which it 6 surrounds at male portion 8, thereby improving the hydraulic seal between hose 2 and connector 4 and preventing them from separating from each other. Any play between ring 6 and hose 2 is eliminated when assembly is complete. Even after assembly is complete, ring 6 still compresses the end of hose 2 onto male portion 8.

Optionally, the method comprises the steps of:
- recycling polymeric material,
- using such recycled material, at least partly, to make at least one of inner layer 22, outer layer 21, intermediate layer 23, ring 6.

Intermediate layer 23 may include, or be made of, synthetic fibres. Such synthetic fibres may consist of fully or partly recycled polymeric material.

According to the invention, the recycled polymeric material is the only material constituting hose 2 or a part thereof (21, 22, 23), or ring 6. Alternatively, one or more of such elements 2, 6, 21, 22, 23 are made of material comprising a fraction of virgin polymer and a fraction of recycled polymer.

In particular, the step of recycling polymeric material comprises a step of obtaining granules or at least one thread of polymeric material, wherein at least a part of such polymeric material has been recycled. For example, granules or a polymeric thread of at least partly recycled material are used for making the polymeric parts of connection 1.

Optionally, outer and inner layers 21, 22 are made by extrusion. According to some possible variants, the hose is made by extrusion.

The invention also concerns the use of connection 1 in a cooling circuit of a motor vehicle, in particular in an internal combustion vehicle, in a hybrid vehicle, or in an electric vehicle.

The method of the invention is fast and economical, in that it does not require the ring to be assembled in a separate step, since such assembly operation occurs simultaneously with the insertion of male portion 8 into hose 2.

Of course, without prejudice to the principle of the invention, the forms of embodiment and the implementation details may be extensively varied from those described and illustrated herein by way of non-limiting example, without however departing from the scope of the invention as set out in the appended claims.

## Claims

1. Connection (1) for a fluid, comprising:
- a hose (2), in which a fluid is intended to flow, comprising: an outer layer (21) of polymeric material, an inner layer (22) of polymeric material, and at least one intermediate layer (23), interposed between the outer and inner layers (21, 22), made from net, mesh, braid, spiral-wrapped wire, textile fibres, fabric, or non-woven fabric,
- a connector (4), in which the fluid is intended to flow, and which is in fluidic communication with the hose (2); wherein the hose (2) is mounted around a male portion (8) of the connector (4),
- a ring (6) made of polymeric material, mounted around the hose (2) at the male portion (8) of the connector (4);
wherein the ring (6), when mounted around the hose (2) at the male portion (8), is deformed and exerts compression on the hose (2) because of such deformation.

2. Connection according to claim 1, wherein the ring (6) has a continuous circular profile.

3. Connection according to claim 1 or 2, wherein the ring (6) has no other means for compressing the hose (2) onto the male portion (8) of the connector (4).

4. Connection according to any one of the preceding claims, wherein the outer and inner layers (21, 22) are made of thermoplastic elastomer or thermosetting elastomer.

5. Connection according to any one of the preceding claims, wherein the intermediate layer (23) is made of aramid fibre, PA, or PET.

6. Connection according to any one of the preceding claims, wherein the material of the ring (6) is more rigid than the material of the inner layer (22) or the material of the outer layer (21).

7. Connection according to any one of the preceding claims, wherein the ring (6) has a cylindrical shape.

8. Vehicle comprising a connection (1) according to any one of the preceding claims.

9. Method for producing a connection (1) according to any one of claims 1 to 7, comprising the steps of:
- providing the hose (2), the connector (4), and the ring (6),
- inserting one end of the hose (2) into the ring (6),
- inserting the male portion (8) of the connector (4) into the end of the hose (2), thereby causing a deformation of the end of the hose (2) and of the ring (6).

10. Method according to claim 9, wherein the step of inserting the male portion (8) of the connector (4) into the end of the hose (2) is preceded by the step of widening the end of the hose (2) to facilitate the insertion of the male portion (8).

11. Method according to claim 9 or 10, wherein the ring (6) is obtained by using an extrusion or injection-moulding process.

12. Method according to claim 9, 10 or 11, wherein the step of inserting the male portion (8) of the connector (4) into the end of the hose (2) is carried out in an automated manner.

13. Method according to claim 10, wherein the step of widening the end of the hose (2) is carried out in an automated manner.

14. Method according to any one of claims 9 to 13, comprising the steps of:
- recycling polymeric material,
- using such recycled material, at least partly, to make at least one of the inner layer (22), the outer layer (21), the intermediate layer (23), the ring (6).

15. Method according to claim 14, wherein the step of recycling polymeric material comprises the step of obtaining granules or threads at least partly consisting of recycled polymeric material.

16. Use of a connection (1) according to any one of claims 1 to 7 in a cooling circuit of a motor vehicle.
